# FASCICULE DE BREVET EUROPEEN

(11) **EP 2 294 320 B1**
(45) Date de publication et mention de la délivrance du brevet: **05.12.2018**
(21) Numéro de dépôt: 09754065.2
(22) Date de dépôt: 19.05.2009
(51) Int. Cl.: F04D 27/02, F02C 9/18, F02K 3/04

(54) **COLLECTEUR D'AIR DANS UNE TURBOMACHINE**
LUFTSAMMLER IN EINER TURBOMASCHINE
AIR COLLECTOR IN A TURBOMACHINE

(30) Priorité: 29.05.2008 FR 0802923
(43) Date de publication de la demande: 16.03.2011
(73) Titulaire: Safran Aircraft Engines, 75015 Paris (FR)
(72) Inventeur: BIL, Eric, Stephan, 77590 Chartrettes (FR); BRAULT, Michel, Gilbert, Roland, 91480 Quincy sous Senart (FR)
(74) Mandataire: Pichat, Thierry
(86) Numéro de dépôt international: PCT/FR2009/000582
(87) Numéro de publication internationale: WO 2009/144415

(56) Documents cités:
- EP-A1- 1 500 824
- EP-A2- 1 898 067
- WO-A-2006/060010
- DE-A1- 3 333 437
- FR-A- 2 695 161
- US-A- 5 619 850
- US-A1- 2003 035 719

## Description

L'invention concerne une turbomachine équipée d'un système d'injection d'air dans un compresseur haute pression.

Une turbomachine à double flux comprend une entrée d'air à l'amont qui alimente un flux d'air primaire passant dans des étages de compression basse et haute pression puis dans une chambre de combustion, et un flux d'air secondaire contournant les étages de compression et la chambre de combustion et rejoignant en sortie le flux d'air primaire pour augmenter la poussée.

Le compresseur haute pression comprend des redresseurs et des roues mobiles disposés en alternance et entourés par un carter externe.

Lors du fonctionnement de la turbomachine, un phénomène de pompage consistant en une inversion soudaine du sens de l'écoulement dans le compresseur haute pression peut apparaître. Ce phénomène s'apparente à un choc et peut avoir des conséquences mécaniques désastreuses telles que des ruptures d'aubes ou bien l'endommagement des dispositifs d'étanchéité dans la veine du compresseur haute pression.

Le décollement de la couche limite d'air sur la surface interne du carter externe du compresseur haute pression peut conduire à des perturbations dans l'écoulement d'air du flux primaire favorisant le pompage du compresseur haute pression.

Pour éviter un décollement de la couche limite, et ainsi augmenter la marge au pompage, il est connu de prélever de l'air dans une partie aval du compresseur haute pression entre un étage redresseur et une roue mobile et de le réinjecter en amont de la première roue mobile en entrée du compresseur haute pression.

Cette technique implique l'utilisation d'un collecteur d'air annulaire monté radialement autour du carter externe du compresseur haute pression. Cependant, l'espace disponible autour du carter externe est déjà très occupé par des accessoires et des équipements de la turbomachine tels que des conduites de carburant, d'huile, des circuits électriques, des vérins... Une telle turbomachine est connu du document EP 1 688 590 A1. En général, les premiers étages de redresseurs sont à calage variable, et leurs aubes comprennent des pivots traversant le carter externe et reliés par des biellettes à un anneau de commande monté autour du carter externe et actionné par un vérin ou un moteur logé dans l'espace précité. Il est donc difficile, voire impossible de placer un collecteur autour du carter externe afin de réinjecter de l'air en amont de la première roue mobile.

Il n'est pas envisageable d'allonger le compresseur haute pression et de disposer le collecteur entre l'étage redresseur d'entrée et la première roue mobile, car cette solution conduirait à une inacceptable augmentation de longueur et de masse de la turbomachine.

L'invention a notamment pour but de résoudre ce problème de façon simple, efficace et économique.

Elle propose à cet effet, une turbomachine, telle un turboréacteur à double flux, comprenant un carter intermédiaire comportant une paroi interne de révolution délimitant extérieurement une veine d'écoulement d'un flux d'air primaire et à l'extrémité aval de laquelle est fixé un carter externe d'un compresseur haute pression, et des moyens de prélèvement d'air en aval dans la veine du compresseur haute pression reliés en sortie à des moyens de réinjection d'air dans une partie amont du compresseur haute pression, caractérisée en ce que les moyens de prélèvement d'air sont reliés aux moyens de réinjection d'air par un collecteur annulaire entourant la paroi interne de révolution du carter intermédiaire en amont du compresseur haute pression et situé radialement entre cette paroi interne de révolution et une paroi externe de révolution du carter intermédiaire qui délimite intérieurement la veine du flux secondaire de la turbomachine.

Selon l'invention, le collecteur annulaire est agencé à l'intérieur du carter intermédiaire, ce qui évite un allongement du compresseur et un alourdissement de la turbomachine, et peut néanmoins être alimenté de façon simple en air prélevé en aval sur le compresseur haute pression. La liaison des moyens de réinjection au collecteur annulaire est simple à réaliser, ce qui permet de minimiser les coûts de fabrication.

Selon une autre caractéristique de l'invention, le collecteur s'étend entre un flasque annulaire aval du carter intermédiaire et des parois incurvées de déviation de flux, formées dans le carter intermédiaire en sortie de vannes de décharge.

On utilise ainsi des parois pré-existantes pour délimiter au moins en partie le collecteur.

Le collecteur est encore délimité par une paroi radialement externe qui relie les parois de déviation de flux au flasque annulaire aval du carter intermédiaire.

Cette paroi radialement externe peut avantageusement être réalisée de fonderie avec les parois de déviation de flux et le flasque annulaire aval.

En variante, elle peut être rapportée entre les parois de déviation de flux et le flasque annulaire aval.

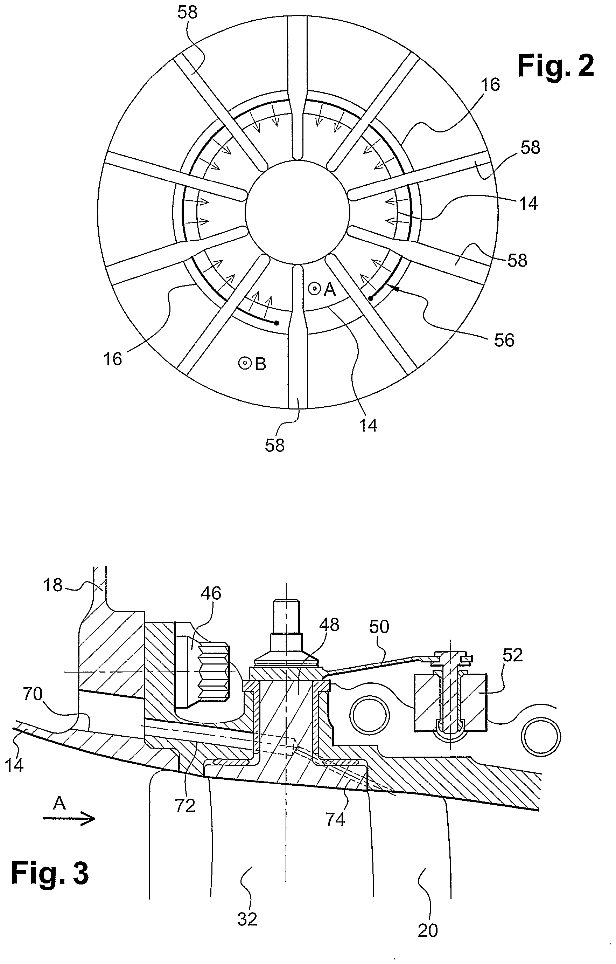

Le collecteur s'étend à travers au moins certains des bras radiaux du carter intermédiaire, et sur une étendue angulaire telle que celle représentée en figure 2, cette étendue pouvant être de 360°.

Avantageusement, le collecteur a une section dont l'aire varie circonférentiellement pour fournir une pression d'air sensiblement uniforme à tous les moyens de réinjection.

Le collecteur peut comprendre un ou plusieurs orifices d'alimentation réalisé dans le flasque annulaire aval du carter intermédiaire et relié aux moyens de prélèvement d'air.

Selon une autre caractéristique de l'invention, les moyens de réinjection d'air comprennent une pluralité de perçages réalisés dans le flasque annulaire aval du carter intermédiaire et répartis sur la périphérie du collecteur.

Chaque perçage peut déboucher en aval dans un autre perçage formé dans l'épaisseur du carter externe du compresseur, cet autre perçage découchant dans la veine du compresseur en amont de la première roue mobile. Cet autre perçage peut comprendre une première partie débouchant dans une seconde partie oblique orientée vers les bords d'attaque des aubes de la première roue mobile du compresseur.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique partielle en coupe axiale d'une turbomachine comprenant un compresseur haute pression agencé en aval d'un carter intermédiaire et des moyens de réinjection d'air dans le compresseur haute pression selon l'invention ;
- la figure 2 une est vue schématique depuis l'aval du carter intermédiaire comprenant un collecteur annulaire selon l'invention ;
- la figure 3 est une vue schématique partielle en coupe axiale des moyens de réinjection d'air dans le compresseur haute pression selon l'invention ;
- la figure 4 est une vue schématique partielle en perspective de l'étage redresseur d'entrée monté dans le carter externe d'un compresseur haute pression et des moyens de réinjection d'air dans ce compresseur.

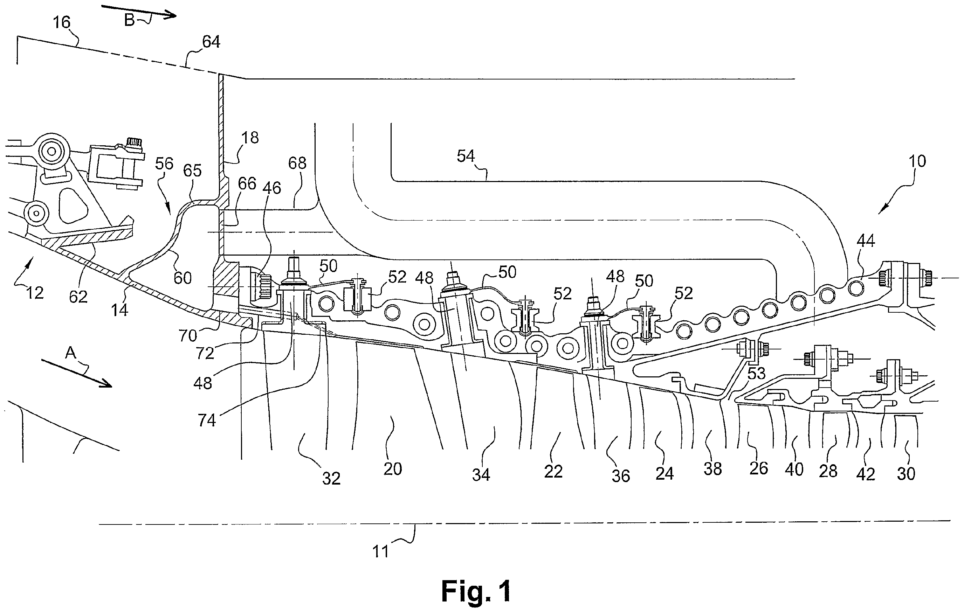

On se réfère tout d'abord à la figure 1 qui représente un compresseur haute pression 10 d'axe 11 agencé en aval d'un carter intermédiaire 12 qui comporte deux parois de révolution coaxiales interne 14 et externe 16 reliées à leurs extrémités aval par un flasque annulaire 18. La paroi interne de révolution 14 délimite extérieurement une veine d'écoulement d'un flux d'air primaire (flèche A) et la paroi externe de révolution 16 délimite intérieurement une veine d'écoulement d'un flux d'air secondaire (flèche B).

Le compresseur haute pression 10 comprend une alternance de roues mobiles 20, 22, 24, 26, 28, 30 et de redresseurs 32, 34, 36, 38 40, 42 entourés par un carter externe 44 fixé par des boulons 46 à son extrémité amont sur le flasque aval 18 du carter intermédiaire 12. L'entrée du compresseur haute pression 10 comprend un redresseur 32 permettant de canaliser vers la première roue mobile 20 le flux d'air sortant de la veine du carter intermédiaire 12. Les trois premiers étages redresseurs 32, 34, 36 du compresseur haute pression 10 sont à calage variable, c'est-à-dire que l'orientation des redresseurs par rapport au flux d'air primaire A est variable en fonction du régime moteur, ce qui permet d'optimiser le fonctionnement de la turbomachine. Pour cela, chaque redresseur 32, 34, 36 comprend à son extrémité radialement externe un pivot 48 monté dans un orifice du carter externe 44. Chaque pivot d'aube 48 est relié à son extrémité radialement externe par une biellette 50 à un anneau de commande 52 qui s'étend autour du carter externe 44 du compresseur 10 et qui est déplaçable en rotation par un vérin ou un moteur autour de l'axe 11 du compresseur 10 pour transmettre aux aubes un mouvement de rotation autour des axes de leurs pivots 48.

Un prélèvement d'air est prévu, par exemple à des fins de dégivrage, entre le quatrième étage redresseur 38 et la quatrième roue mobile 26 du compresseur haute pression 10. Pour cela, un espace axial annulaire 53 est formé entre l'extrémité radialement externe aval de l'étage redresseur 38 et l'extrémité radialement externe amont de la roue mobile 26. Les moyens de prélèvement d'air dans le compresseur haute pression 10 comprennent un conduit 54 dont l'extrémité d'aspiration est montée dans un orifice du carter externe 44. Cet orifice est positionné axialement sur le carter externe 44 de telle manière qu'il communique avec l'espace axial 53 entre l'étage redresseur 38 et la roue mobile 26.

En fonctionnement, une partie de l'air du flux primaire A circulant dans le compresseur haute pression 10 s'échappe à travers l'espace axial 53 et est aspiré dans le conduit 54 permettant d'amener cet air sous pression à des équipements à dégivrer. Une partie de l'air prélevé est selon l'invention réinjecté en amont de la première roue mobile 20 afin de limiter les décollements de couche limite d'air sur les parois délimitant extérieurement la veine d'air passant dans le compresseur haute pression 10, ce qui aurait pour conséquence de diminuer la marge au pompage de ce compresseur 10.

Ce type de réinjection d'air nécessite l'installation d'un collecteur autour du carter externe 44 du compresseur haute pression 10, ce qui s'avère très difficile à réaliser du fait de la présence des systèmes à calage variable 48, 50, 52 et d'autres équipements tels que des circuits électrique, de lubrification ou de carburant.

Selon l'invention, un collecteur annulaire 56 est monté entre les parois de révolution interne 14 et externe 16 du carter intermédiaire 12 et alimente des moyens d'injection d'air formés dans le flasque annulaire 18 et le carter externe 44 du compresseur 10.

Le collecteur annulaire 56 s'étend à travers certains au moins des bras radiaux 58 du carter intermédiaire 12 (figure 2). Ces bras 58 traversent les veines d'écoulement des flux d'air primaire A et secondaire B et ont pour fonction d'assurer la transmission des efforts en vol et de permettre le passage de servitudes ou d'équipements tels que des câbles, des conduits hydrauliques, etc. Chaque espace circonférentiel entre deux bras consécutifs 58 du carter intermédiaire 12 comprend une paroi incurvée 60 qui s'étend circonférentiellement d'un bras à l'autre et qui est destinée à dévier un flux d'air sortant d'une vanne de décharge 62 montée en amont de chaque paroi incurvée 60 et représentée en position ouverte sur la figure 1.

Au décollage et à l'atterrissage et quand l'avion traverse des nuages, il est possible que des grêlons entrent dans le flux d'air primaire et atteignent la chambre de combustion (non représentée) dans laquelle débouche le compresseur haute pression 10, avec pour conséquence un risque d'extinction de la chambre de combustion. L'ouverture des vannes de décharge 62 permet qu'une partie du flux d'air contenant les grêlons soit déviée par les parois incurvées 60 à travers des grilles 64 de la paroi annulaire externe 16 du carter intermédiaire 12 pour s'évacuer dans le flux d'air secondaire B. L'ouverture des vannes de décharge 62 permet ainsi dans certaines configurations d'éviter un pompage du compresseur haute pression 10.

La section du collecteur annulaire 56 est délimitée intérieurement par la paroi de révolution interne 14 du carter intermédiaire 12, à l'aval par le flasque annulaire 18, et à l'amont par les parois de déviation 60 dont la concavité est tournée vers l'intérieur du collecteur 56. Une paroi radialement externe 65 relie les parois incurvées 60 au flasque annulaire aval 18 du carter intermédiaire 12 pour fermer le collecteur 56.

Le collecteur 56 comprend au moins un orifice d'alimentation 66 réalisé dans le flasque annulaire aval 18 du carter intermédiaire 12 et raccordé par un tube 68 au conduit de prélèvement d'air 54.

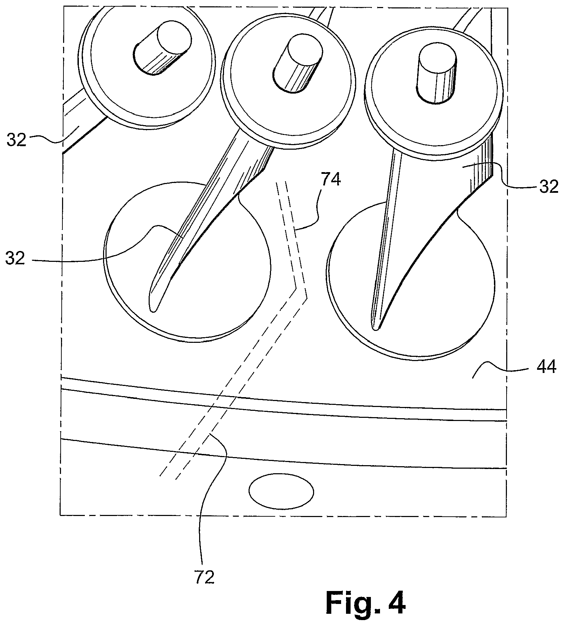

Des moyens de réinjection d'air sont alimentés par le collecteur 56 afin de réinjecter en amont de la première roue mobile 20 l'air prélevé en aval du compresseur haute pression 10. Ces moyens de réinjection comprennent une pluralité de perçages 70 réalisés dans le flasque annulaire aval 18 et régulièrement répartis sur sa périphérie. Ces perçages 70 sont positionnés radialement entre l'orifice d'alimentation 66 et la paroi interne 14 du carter intermédiaire 12 et sont répartis circonférentiellement entre les boulons 46 de fixation du carter externe 44 sur le flasque aval 18. Chaque perçage 70 débouche en aval dans un perçage formé dans l'épaisseur du carter 44 du compresseur haute pression 10 pour déboucher lui-même dans la veine du compresseur en amont de la première roue mobile 20. Le perçage du carter externe 44 comprend une première partie amont 72 et une seconde partie aval 74. La première partie 72 du perçage du carter externe 44 est formée dans la bride annulaire amont du carter externe 44 du compresseur 10 et est orientée de telle manière que son extrémité amont débouche dans le perçage 70 du flasque aval 18 situé entre les boulons 46 et que son extrémité aval débouche dans l'extrémité amont de la seconde partie 74 du perçage et entre deux aubes du redresseur d'entrée 32 du compresseur haute pression 10 (figure 4). La seconde partie 74 du perçage est oblique et débouche à son extrémité aval dans la veine du compresseur haute pression 10. Cette seconde partie 74 est orientée sensiblement tangentiellement à la surface interne du carter externe 44 et vers les bords d'attaque des aubes de la première roue mobile 20 du compresseur 10.

Le diamètre du perçage 70 du flasque aval 18 est supérieur au diamètre de la première partie 72 du perçage du carter externe 44, qui est lui-même supérieur à celui de la deuxième partie 74 du perçage du carter externe 44.

Le fonctionnement du circuit d'injection d'air dans le compresseur haute pression fonctionne de la manière suivante. Une partie de l'air circulant dans la veine du compresseur haute pression 10 est prélevée par le conduit 54 et par le tube d'alimentation 68 du collecteur 56. L'air qui circule annulairement dans le collecteur 56 est réinjecté dans les perçages 70, 72, 74 du flasque aval 18 et du carter externe 44.

Les diamètres des première et seconde parties 72, 74 du perçage du carter externe 44 peuvent être de l'ordre de 5 mm et 3 mm, respectivement.

En variante, le collecteur 56 peut comprendre plusieurs orifices d'alimentation 66 répartis sur la circonférence du flasque aval 18, chaque orifice d'alimentation 66 étant raccordé par un tube 68 à un conduit 54 de prélèvement d'air dans la veine du compresseur haute pression 10.

Le collecteur annulaire 56 peut avoir une section dont l'aire varie en direction circonférentielle pour fournir une pression d'air sensiblement uniforme à tous les perçages 70 du flasque aval 18, et éviter des hétérogénéités circonférentielles de pression statique autour de l'axe 11 du compresseur 10, qui seraient dommageables pour son fonctionnement.

Le collecteur 56 peut s'étendre sur 360° ou moins. Dans le mode de réalisation représenté aux dessins, le collecteur 56 s'étend sur environ 320° et traverse huit des dix bras 58 du carter intermédiaire 12.

La paroi radialement externe 65 du collecteur 56 peut être réalisée de fonderie avec les parois de déviation de flux 60 et le flasque annulaire aval 18 ou bien être rapportée entre les parois de déviation 60 et le flasque annulaire 18.

## Revendications

1. Turbomachine à double flux, telle qu'un turboréacteur à double flux, comprenant un carter intermédiaire (12) comportant une paroi interne de révolution (14) délimitant extérieurement une veine d'écoulement d'un flux d'air primaire et à l'extrémité aval de laquelle est fixé un carter externe (44) d'un compresseur haute-pression (10), et des moyens de prélèvement d'air (54, 68) en aval dans la veine du compresseur haute pression reliés en sortie à des moyens de réinjection d'air (70, 72, 74) dans une partie amont du compresseur haute pression (10), **caractérisée en ce que** les moyens de prélèvement d'air (54, 68) sont reliés aux moyens de réinjection d'air (70, 72, 74) par un collecteur annulaire (56) entourant la paroi interne de révolution (14) du carter intermédiaire (12) en amont du compresseur haute pression et situé radialement entre cette paroi interne de révolution (14) et une paroi externe de révolution (16) du carter intermédiaire (12) qui délimite intérieurement la veine d'un flux secondaire de la turbomachine.

2. Turbomachine selon la revendication 1, **caractérisée en ce que** le collecteur (56) s'étend entre un flasque annulaire aval (18) du carter intermédiaire (12) et des parois incurvées de déviation de flux (60), formées dans le carter intermédiaire (12) en sortie de vannes de décharge (62).

3. Turbomachine selon la revendication 2, **caractérisée en ce que** le collecteur (56) est délimité au moins en partie par les parois incurvées de déviation de flux (60), par le flasque annulaire aval (18) du carter intermédiaire (12) et la paroi interne de révolution (14) de ce carter (44).

4. Turbomachine selon la revendication 2 ou 3, **caractérisée en ce que** le collecteur (56) comprend une paroi radialement externe (65) reliant les parois de déviation de flux (60) au flasque annulaire aval (18) du carter intermédiaire (12).

5. Turbomachine selon la revendication 4, **caractérisée en ce que** la paroi radialement externe (65) du collecteur (56) est réalisée de fonderie avec les parois de déviation de flux (60) et le flasque annulaire aval (18).

6. Turbomachine selon la revendication 4, **caractérisée en ce que** la paroi radialement externe (65) du collecteur (56) est rapportée entre les parois de déviation de flux (60) et le flasque annulaire aval (18).

7. Turbomachine selon l'une des revendications 1 à 6, **caractérisée en ce que** le collecteur (56) s'étend à travers au moins certains des bras radiaux (58) du carter intermédiaire (12).

8. Turbomachine selon l'une des revendications 1 à 7, **caractérisée en ce que** le collecteur (56) a une étendue angulaire inférieure ou égale à 360°.

9. Turbomachine selon l'une des revendications précédentes, **caractérisée en ce que** le collecteur (56) a une section dont l'aire varie circonférentiellement pour fournir une pression d'air sensiblement uniforme à tous les moyens de réinjection (70, 72, 74).

10. Turbomachine selon l'une des revendications précédentes, **caractérisée en ce que** le collecteur (56) comprend au moins un orifice d'alimentation (66) réalisé dans le flasque annulaire aval (18) du carter intermédiaire (12) et relié aux moyens de prélèvement d'air (54, 68).

11. Turbomachine selon l'une des revendications précédentes, **caractérisée en ce que** les moyens de réinjection d'air comprennent une pluralité de perçages (70) réalisés dans le flasque annulaire aval (18) du carter intermédiaire (12) et répartis sur la périphérie du collecteur (56).

12. Turbomachine selon la revendication 11, **caractérisée en ce que** chaque perçage (70) débouche en aval dans un autre perçage formé dans l'épaisseur du carter externe (44) du compresseur (10), cet autre perçage découchant dans la veine du compresseur en amont de la première roue mobile (20).

13. Turbomachine selon la revendication 12, **caractérisée en ce que** l'autre perçage comprend une première partie (72) débouchant dans une seconde partie oblique (74) orientée vers les bords d'attaque des aubes de la première roue mobile (20) du compresseur (10).

## Patentansprüche

1. Doppelströmiges Turbotriebwerk, wie etwa doppelströmiges Turbostrahltriebwerk, enthaltend ein Zwischengehäuse (12) mit einer inneren Umlaufwand (14), die außen einen Strömungskanal für einen Primärluftstrom eingrenzt und an deren stromabwärtiges Ende ein Außengehäuse (44) eines Hochdruckverdichters (10) befestigt ist, sowie Luftentnahmeeinrichtungen (54, 68) stromaufwärts in dem Kanal des Hochdruckverdichters, die am Auslass mit Luftrückführeinrichtungen (70, 72, 74) zur Rückführung in einen stromaufwärtigen Abschnitt des Hochdruckverdichters (10) verbunden sind, **dadurch gekennzeichnet, dass** die Luftentnahmeeinrichtungen (54, 68) mit den Luftrückführeinrichtungen (70, 72, 74) über einen ringförmigen Kollektor (56) verbunden sind, der die innere Umlaufwand (14) des Zwischengehäuses (12) stromaufwärts des Hochdruckverdichters umgibt und radial zwischen dieser inneren Umlaufwand (14) und einer äußeren Umlaufwand (16) des Zwischengehäuses (12) liegt, die innen den Kanal für einen Sekundärstrom des Turbotriebwerks eingrenzt.

2. Turbotriebwerk nach Anspruch 1, **dadurch gekennzeichnet, dass** der Kollektor (56) sich zwischen einem stromabwärtigen Ringflansch (18) des Zwischengehäuses (12) und gekrümmten Stromablenkwänden (60) erstreckt, die in dem Zwischengehäuse (12) am Auslass von Ablassventilen (62) ausgebildet sind.

3. Turbotriebwerk nach Anspruch 2, **dadurch gekennzeichnet, dass** der Kollektor (56) zumindest teilweise von den gekrümmten Stromablenkwänden (60), dem stromabwärtigen Ringflansch (18) des Zwischengehäuses (12) und der inneren Umlaufwand (14) dieses Gehäuses (44) eingegrenzt wird.

4. Turbotriebwerk nach Anspruch 2 oder 3, **dadurch gekennzeichnet, dass** der Kollektor (56) eine radial äußere Wand (65) aufweist, welche die gekrümmten Stromablenkwände (60) mit dem stromabwärtigen Ringflansch (18) des Zwischengehäuses (12) verbindet.

5. Turbotriebwerk nach Anspruch 4, **dadurch gekennzeichnet, dass** die radial äußere Wand (65) des Kollektors (56) mit den gekrümmten Stromablenkwänden (60) und dem stromabwärtigen Ringflansch (18) gegossen ausgebildet ist.

6. Turbotriebwerk nach Anspruch 4, **dadurch gekennzeichnet, dass** die radial äußere Wand (65) des Kollektors (56) zwischen den gekrümmten Stromablenkwänden (60) und dem stromabwärtigen Ringflansch (18) eingesetzt ist.

7. Turbotriebwerk nach einem der Ansprüche 1 bis 6, **dadurch gekennzeichnet, dass** der Kollektor (56) sich zumindest durch bestimmte der radialen Arme (58) des Zwischengehäuses (12) erstreckt.

8. Turbotriebwerk nach einem der Ansprüche 1 bis 7, **dadurch gekennzeichnet, dass** der Kollektor (56) eine Winkelerstreckung kleiner oder gleich 360° hat.

9. Turbotriebwerk nach einem der vorangehenden Ansprüche, **dadurch gekennzeichnet, dass** der Kollektor (56) einen Querschnitt hat, dessen Querschnittfläche umfänglich variiert, um sämtlichen Rückführeinrichtungen (70, 72, 74) einen im Wesentlichen einheitlichen Luftdruck bereitzustellen.

10. Turbotriebwerk nach einem der vorangehenden Ansprüche, **dadurch gekennzeichnet, dass** der Kollektor (56) zumindest eine Zuführöffnung (66) aufweist, die in dem stromabwärtigen Ringflansch (18) des Zwischengehäuses (12) ausgeführt ist und mit den Luftentnahmeeinrichtungen (54, 68) verbunden ist.

11. Turbotriebwerk nach einem der vorangehenden Ansprüche, **dadurch gekennzeichnet, dass** die Luftrückführeinrichtungen eine Mehrzahl von Bohrungen (70) aufweisen, die in dem stromabwärtigen Ringflansch (18) des Zwischengehäuses (12) ausgebildet und über den Umfang des Kollektors (56) verteilt sind.

12. Turbotriebwerk nach Anspruch 11, **dadurch gekennzeichnet, dass** jede Bohrung (70) stromabwärts in eine weitere Bohrung mündet, die in der Materialdicke des Außengehäuses (44) des Verdichters (10) ausgebildet ist, wobei diese weitere Bohrung in den Kanal des Verdichters stromaufwärts des ersten Laufrads (20) mündet.

13. Turbotriebwerk nach Anspruch 12, **dadurch gekennzeichnet, dass** die weitere Bohrung einen ersten Abschnitt (72) aufweist, der in einen schräg verlaufenden zweiten Abschnitt (74) mündest, der den Anströmkanten der Schaufeln des ersten Laufrads (20) des Verdichters (10) zugewandt ist.

## Claims

1. A bypass turbomachine, such as a bypass turbojet, including an intermediate casing (12) comprising an inner wall forming a body of revolution (14) defining the outside of a primary air flow stream and having fastened to the downstream end thereof an outer casing (44) of a high pressure compressor (10), and air bleed means for bleeding air (54,68) downstream from the stream through the high pressure compressor, the outlet of the air bleed means being connected to air reinjection means for reinjecting air (70, 72, 74) into an upstream portion of the high pressure compressor (10), the turbomachine wherein the air bleed means (54,68) are connected to the air reinjection means (70, 72, 74) by an annular manifold (56) surrounding the inner wall (14) of the intermediate casing (12) upstream from the high pressure compressor and situated radially between said inner wall (14) and an outer wall (16) of the intermediate casing (12) forming a body of revolution that defines the inside of a secondary air flow stream of the turbomachine.

2. A turbomachine according to claim 1, wherein the manifold (56) extends between a downstream annular plate (18) of the intermediate casing (12) and curved flow deflection walls (60) formed in the intermediate casing (12) at the outlets from discharge valves (62).

3. A turbomachine according to claim 2, wherein the manifold (56) is defined at least in part by the curved flow deflector walls (60), by the downstream annular plate (18) of the intermediate casing (12) and by the inner wall (14) of the casing (44).

4. A turbomachine according to claim 2 or claim 3, wherein the manifold (56) comprises a radially outer wall (65) connecting the flow deflector walls (60) to the downstream annular plate (18) of the intermediate casing (12) .

5. A turbomachine according to claim 4, wherein the radially outer wall (65) of the manifold (56) is made as a casting together with the flow deflector walls (60) and the downstream annular plate (18).

6. A turbomachine according to claim 4, wherein the radially outer wall (65) of the manifold (56) is fitted between the flow deflector walls (60) and the downstream annular plate (18).

7. A turbomachine according to any one of claim 1 to 6, wherein the manifold (56) extends through at least some of the radial arms (58) of the intermediate casing (12).

8. A turbomachine according to any one to claim 1 to 7, wherein the manifold (56) has an angular extent that is less than or equal to 360°.

9. A turbomachine according anyone of the preceding claims, wherein the manifold (56) has a section of area that varies circumferentially in order to deliver air at a pressure that is substantially uniform to all of the reinjection means (70,72,74).

10. A turbomachine according anyone of the preceding claims, wherein the manifold (56) includes at least one feed orifice (66) made in the downstream annular plate (18) of the intermediate casing (12) and connected to the air bleed means (54,68).

11. A turbomachine according anyone of the preceding claims, wherein the air reinjection means comprise a plurality of holes (70) formed in the downstream annular plate (18) of the intermediate casing (12) and distributed at the periphery of the manifold (56).

12. A turbomachine according to claim 11, wherein each hole (70) opens out downstream into another hole formed in the thickness of the outer casing (44) of the compressor (10), said other hole opening out into the stream through the compressor upstream from the first rotor wheel (20).

13. A turbomachine according to claim 12, wherein the other hole comprises a first portion (72) opening out into a second portion that is oblique (74) and oriented towards the leading edges of the blades of the first rotor wheel (20) of the compressor (10).
